# EUROPEAN PATENT APPLICATION

(11) **EP 1 043 353 A1**
(43) Date of publication of application: **11.10.2000**
(21) Application number: 98959162.3
(22) Date of filing: 10.12.1998
(51) Int. Cl.: C08J 3/00, C08L 27/12

(54) **METHOD FOR MODIFYING FLUOROPOLYMER**

(30) Priority: 25.12.1997 JP 35686297
(71) Applicant: Daikin Industries, Ltd., Osaka-shi Osaka 530-8323 (JP)
(72) Inventor: HIRAGA, Yoshiyuki, Yodogawa-seisakusho, Settsu-shi, Osaka 566-8585 (JP); KOMATSU, Satoshi, Yodogawa-seisakusho, Settsu-shi, Osaka 566-8585 (JP); NODA, Tomohisa, Yodogawa-seisakusho, Settsu-shi, Osaka 566-8585 (JP); NAMIMATSU, Masayuki, Yodogawa-seisakusho, Settsu-shi, Osaka 566-8585 (JP)
(74) Representative: HOFFMANN - EITLE
(86) International application number: JP9805598
(87) International publication number: WO9933904

(57) **Abstract**

A method for modifying a fluorine-containing polymer which comprises bringing the fluorine-containing polymer into contact with ozone to prevent discoloration at the time of melt-molding or sintering of the fluorine-containing polymer.

## Description

### TECHNICAL FIELD

The present invention relates to a method for modifying a fluorine-containing polymer to prevent discoloration at melt-molding or sintering of the fluorine-containing polymer.

### BACKGROUND ART

A polymer prepared by emulsion polymerization of tetrafluoroethylene and hexafluoropropylene hitherto had a problem with discoloration in grayish brown or brown when processed by melting into a final product due to causes such as severe melting conditions, existence of residual polymerization initiator, emulsifying agent and coagulant, carbonization of a low molecular weight substance polymerized insufficiently and carbonization of an olefin unit at a backbone of the polymer.

In order to eliminate such discoloration, it is assumed that fluorination treatment as disclosed in, for example, USP 4626587 is necessary. However in case of use of fluorine, there are a problem with cost and also a problem that large-scaled facilities are required to prevent environmental pollution.

Also in case of chlorotrifluoroethylene homopolymer, since transparency is required in most of its applications, discoloration of final products after melt-molding is a very big problem and in that case, to eliminate discoloration of final products after melt-molding, there is a problem that cleaning must be carried out by using a fairy large amount of water.

Namely an object of the present invention is to provide a method for treating a fluorine-containing polymer efficiently to prevent discoloration thereof from arising after melt-molding or sintering.

### DISCLOSURE OF INVENTION

The present invention relates to the method for modifying a fluorine-containing polymer by bringing the fluorine-containing polymer into contact with ozone.

In that case, it is preferable that an atmosphere temperature at the time of contacting is not more than a melting point of the fluorine-containing polymer.

Further it is preferable that the above-mentioned fluorine-containing polymer is in the form of powder or flake.

Further it is preferable that the above-mentioned fluorine-containing polymer is a fluorine-containing polymer which has never been melted after polymerization.

Further it is preferable that the above-mentioned fluorine-containing polymer is a fluorine-containing polymer prepared through emulsion polymerization or suspension polymerization.

Further it is preferable that the above-mentioned fluorine-containing polymer is a copolymer comprising at least two monomers selected from the group consisting of tetrafluoroethylene, hexafluoropropylene, perfluoro(alkyl vinyl ether), ethylene, vinylidene fluoride and chlorotrifluoroethylene, tetrafluoroethylene homopolymer, vinylidene fluoride homopolymer or chlorotrifluoroethylene homopolymer.

Further it is preferable that the above-mentioned fluorine-containing polymer is a copolymer of tetrafluoroethylene and hexafluoropropylene, a copolymer of tetrafluoroethylene and hexafluoropropylene, a copolymer of tetrafluoroethylene, hexafluoropropylene and perfluoro(alkyl vinyl ether) or chlorotrifluoroethylene homopolymer.

### BEST MODE FOR CARRYING OUT THE INVENTION

The present inventors have found that when the fluorine-containing polymer is modified by bringing it into contact with ozone, discoloration of the fluorine-containing polymer which arises at melt-molding or sintering can be prevented.

In the present invention, "modification" means that discoloration of the fluorine-containing polymer which is usually discolored at melt-molding or sintering does not occur when the polymer is brought into contact with ozone through the method of the present invention. Though a mechanism of discoloration-preventing effect is not clear, it can be considered that ozone molecules which come to exist on the surface of the fluorine-containing polymer decompose efficiently, possibly by an oxidizing action thereof, a residual polymerization initiator, emulsifying agent and coagulant, a low molecular weight substance insufficiently polymerized and an olefin unit at a backbone of the polymer which cause discoloration at the time of melt-processing or sintering of the polymer, and thus an effect of preventing discoloration is exhibited.

In the present invention either of melt-processable fluorine-containing polymer and non-melt-processable fluorine-containing polymer may be used as far as it is prepared through emulsion polymerization or suspension polymerization.

Also the fluorine-containing polymer to be used in the present invention is preferably a fluorine-containing polymer which has never been melted after polymerization from the point that in order to increase a reaction speed, it is preferable to sufficiently disperse ozone molecules in the fluorine-containing polymer.

Examples of the fluorine-containing polymer used in the present invention are, for instance, a copolymer comprising at least two monomers selected from the group consisting of tetrafluoroethylene, hexafluoropropylene, perfluoro(alkyl vinyl ether), ethylene, vinylidene fluoride and chlorotrifluoroethylene, tetrafluoroethylene homopolymer, vinylidene fluoride homopolymer, chlorotrifluoroethylene homopolymer (PCTFE), and the like. Among them, the fluorine-containing polymers which exhibit a particularly remarkable modifying effect are a copolymer (FEP) of tetrafluoroethylene and hexafluoropropylene, a copolymer (PFA) of tetrafluoroethylene and perfluoro(alkyl vinyl ether), a copolymer (EPA) of tetrafluoroethylene, hexafluoropropylene and perfluoro(alkyl vinyl ether) and chlorotrifluoroethylene homopolymer.

The above-mentioned perfluoro(alkyl vinyl ether) can be represented by;
the formula (1): CF₂=CFO(CF₂)ₘF, in which m is an integer of 1 to 6, or
the formula (2): 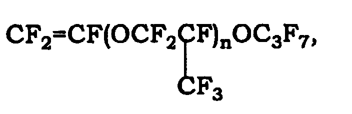 in which n is an integer of 1 to 4.

Then explained below are the method and conditions for bringing the fluorine-containing polymer into contact with ozone in the present invention.

In the present invention, the fluorine-containing polymer is brought into contact with a gas containing ozone.

Firstly a form of the fluorine-containing polymer to be brought into contact with the ozone-containing gas is not particularly limited. The fluorine-containing polymer is preferably in the form of powder or flake from the point that the form in which an area of the polymer contacting with ozone is large and the ozone-containing gas is easily diffused is preferred.

In that case, the fluorine-containing polymer may be in a dry state or in a dispersed state in a solvent.

When the fluorine-containing polymer is used dispersed in a solvent, examples of the usable solvent are, for instance, water, acetic acid, trichlorofluoromethane, ethyl chloride, carbon tetrachloride and the like which have ozone resistance.

Subsequently the fluorine-containing polymer may be brought into contact with the ozone-containing gas in a conventional reactor. Preferred is a reactor provided with an inlet and outlet of the ozone-containing gas from the point that a concentration of ozone in the reactor can be made constant.

An atmosphere temperature when the fluorine-containing polymer is brought into contact with the ozone-containing gas is from 30° to 300°C, preferably from 100° to 250°C. Particularly in case of a melt-processable fluorine-containing polymer, the atmosphere temperature is preferably lower than a melting point of the polymer. When the atmosphere temperature is not less than the melting point of the melt-processable fluorine-containing polymer, a diffusion speed of the ozone-containing gas into the fluorine-containing polymer decreases and it takes much time to obtain a desired effect. When the atmosphere temperature exceeds 300°C, a half-life of ozone is shortened and decomposition of ozone arises. As a result even if a concentration of ozone in the ozone-containing gas is increased or an amount of the ozone-containing gas is increased, the fluorine-containing polymer is hardly modified.

The concentration of ozone in the ozone-containing gas which is supplied to bring ozone into contact with the fluorine-containing polymer is not particularly limited. In consideration of safety, it is preferable that the concentration is less than 30 % by weight based on the ozone-containing gas. When the concentration of ozone is not less than 30 % by weight, the ozone-containing gas becomes unstable remarkably and there is a fear of explosion due to contact of the gas with an organic substance which is contained in a slight amount of contaminant and has C-H bond.

Components other than ozone in the ozone-containing gas may be air, nitrogen gas, He or other inert gas, and an oxidizing gas such as chlorine may be contained therein.

A period of contacting time of the ozone-containing gas with the fluorine-containing polymer and a feeding amount (flow) of the ozone-containing gas into the reactor can be selected experimentally by a person skilled in the art.

The method of the present invention is then explained below in detailed by means of examples, but the present invention is not limited thereto.

### PREPARATION EXAMPLE 1

A dispersion of tetrafluoroethylene/hexafluoropropylene copolymer (FEP) was prepared through emulsion-polymerization by using ammonium persulfate as an initiator and ammonium perfluorooctanoate as an emulsifying agent, and then coagulated with a nitric acid, dehydrated and dried to give a fluorine-containing polymer A in the form of powder (melting point: 257°C).

### EXAMPLE 1

A reactor made of Ni and provided with an inlet and outlet of ozone-containing gas (capacity: about 0.5 liter, inner diameter: 10 cm, height: 6.5 cm) was charged with 50 g of the fluorine-containing polymer A in the form of powder, and then was put in a sand bath maintained at a temperature of 150°C. After making sure that the inside temperature of the reactor became 150°C, an ozone generator which could generate ozone of 1,550 ppm from air was started, and an ozone-containing gas having an ozone concentration of 0.15 % by weight was passed through the reactor at a flow rate of 0.1 NL/min to be brought into contact with the fluorine-containing polymer A for 12 hours.

### (Evaluation)

Subsequently color of pellets obtained by melt-molding at 372°C was evaluated. The color of the pellets was milky white.

### EXAMPLES 2 to 3

Contacting treatment of the fluorine-containing polymer A was carried out in the same manner as in Example 1 except that a contacting time was changed to 8 or 10 hours. The evaluation was made in the same manner as in Example 1.

In either case, color of the pellets was milky white.

### COMPARATIVE EXAMPLE 1

Contacting treatment of the fluorine-containing polymer A was carried out and evaluation was made in the same manner as in Example 1 except that air was passed instead of the gas. Color of molded pellets was dark brown.

### PREPARATION EXAMPLE 2

A dispersion of tetrafluoroethylene/perfluoro(alkyl vinyl ether)/hexafluoropropylene copolymer (EPA) was prepared through emulsion-polymerization by using ammonium persulfate as an initiator and ammonium perfluorooctanoate as an emulsifying agent, and then dried (washing was not carried out) to give a fluorine-containing polymer B in the form of flake (melting point: 255°C).

### EXAMPLE 4

The same contacting procedures as in Example 1 were repeated except that the fluorine-containing polymer B was used instead of the fluorine-containing polymer A.

### (Evaluation)

Color of pellets melt-molded at 372°C was evaluated with naked eyes. The color of the pellets was milky white.

### COMPARATIVE EXAMPLE 2

Contacting treatment of the fluorine-containing polymer was carried out and evaluation was made in the same manner as in Example 4 except that air was passed instead of the gas. The fluorine-containing polymer B was colored dark brown.

### INDUSTRIAL APPLICABILITY

According to the present invention, discoloration at the time of melt-molding or sintering of the fluorine-containing polymer can be prevented.

## Claims

1. A method for modifying a fluorine-containing polymer comprising bringing the fluorine-containing polymer into contact with ozone.

2. The modifying method of Claim 1, wherein an atmosphere temperature at the time of said contact is not more than a melting point of the fluorine-containing polymer.

3. The modifying method of Claim 1 or 2, wherein said fluorine-containing polymer is in the form of powder or flake.

4. The modifying method of any of Claims 1 to 3, wherein said fluorine-containing polymer is a fluorine-containing polymer which has never been melted after polymerization.

5. The modifying method of any of Claims 1 to 4, wherein said fluorine-containing polymer is a fluorine-containing polymer prepared through emulsion polymerization or suspension polymerization.

6. The modifying method of any of Claims 1 to 5, wherein said fluorine-containing polymer is a copolymer comprising at least two monomers selected from the group consisting of tetrafluoroethylene, hexafluoropropylene, perfluoro(alkyl vinyl ether), ethylene, vinylidene fluoride and chlorotrifluoroethylene, tetrafluoroethylene homopolymer, vinylidene fluoride homopolymer or chlorotrifluoroethylene homopolymer.

7. The modifying method of any of Claims 1 to 5, wherein said fluorine-containing polymer is a copolymer of tetrafluoroethylene and hexafluoropropylene, a copolymer of tetrafluoroethylene and hexafluoropropylene, a copolymer of tetrafluoroethylene, hexafluoropropylene and perfluoro(alkyl vinyl ether) or chlorotrifluoroethylene homopolymer.
